# EUROPEAN PATENT SPECIFICATION

(11) **EP 3 607 361 B1**
(45) Date of publication and mention of the grant of the patent: **26.08.2020**
(21) Application number: 18734474.2
(22) Date of filing: 14.06.2018
(51) Int. Cl.: G01V 3/10

(54) **METHOD AND DEVICE FOR MEASURING THE BURIAL DEPTH OF A LINE**
VERFAHREN UND VORRICHTUNG ZUR MESSUNG DER GRABENTIEFE EINER LEITUNG
PROCÉDÉ ET DISPOSITIF DE MESURE DE LA PROFONDEUR D'ENFOUISSEMENT D'UNE LIGNE

(30) Priority: 23.06.2017 DE 102017210672
(43) Date of publication of application: 12.02.2020
(73) Proprietor: Heinrich Hirdes GmbH, 21079 Hamburg (DE)
(72) Inventor: KÖLBEL, Jan, 21079 Hamburg (DE)
(74) Representative: Schmidt, Axel
(86) International application number: PCT/EP2018/065902
(87) International publication number: WO 2018/234164

(56) References cited:
- EP-A2- 2 804 020
- WO-A1-2012/178158
- WO-A1-2013/036686
- DE-A1- 2 530 589
- US-A- 4 091 322
- US-B1- 9 684 090

## Description

The present invention relates to a method and a device for measuring the burial depth of a line of the kind that are being laid increasingly under a soil surface on land and in water in the form of conduits and pipelines and energy supply and/or data cables.

In order to protect such lines from external mechanical influences, but also from an intensely fluctuating influence of temperatures and thus to achieve the most constant possible maintenance of an intrinsic temperature, lines of the above-mentioned type are laid in the ground underneath a soil surface. In this connection, a certain depth below the soil surface is specified, which in the case of a line that is as a rule laid in a slot-shaped trench, is also referred to as the burial depth.

On land, a sufficient identification of such line routes and a possible placement of additional protective structures over the respective line is required in order to provide the greatest possible prevention of damage or excavation of the burial depth, for example as part of earth-moving operations. DE 196 14 707 A1 has also proposed applying corresponding warning signals in the form electromagnetic waves to these cables so that when a receiver comes close to them, a corresponding warning can be received.

When using buried underground lines of the above-mentioned type in bodies of water and particularly under a sea bed, additional problems arise. For identification, line routes can in fact be included in nautical charts. Also, additional protection can be provided for sections in line routes that are particularly threatened by shipping or icebergs. Lines, for example in the form of undersea cables, in order to protect them from mechanical damage of the kind that can be caused, for example, by anchors, are laid a particular minimum depth below the sea bed. Tides and currents, however, can reduce this depth to the point where the line is swept bare. As a result, this type of covering as protection could therefore prove to be insufficient, particularly against large anchors.

A covering of the lines that is as a rule composed of sand and/or gravel, however, will be moved and changed by the motion of waves as well as by tides and/or currents in the adjacent water layer. A sea bed is consequently anything but static. Due to tides and sea currents, the sea bed is continuously in motion, particularly in the vicinity of estuaries. As a result, even a specified minimum burial depth of a line can be fallen below within a short period of time. Lines can also be swept completely bare and/or altered in their position by the effects mentioned above by way of example.

Consequently, a covering layer that that extends, for example, as a cover for a so-called export or transport cable from an offshore wind farm to a collection point on the coast and is usually protected with a thickness or layer thickness of approximately 3 m, can be swept completely bare of the covering over the course of a few months due to the effects of currents. At least part of this line is then directly exposed to the mechanical forces of the water. But temperature differences in the water along longer stretches and differing dissipation of a self-heating produce regionally different elongations and compressions of the line, which can cause the line to be displaced or even buck in any direction in space. A temperature that is as uniform as possible due to a sufficient burial depth is very important with many lines, particularly in the case of high-voltage cables because they are very sensitive to thermal overloading. Excessively high thermal loads occurring in some regions can cause unwanted aging effects particularly in the insulation, but also in connection sleeves, etc. and can thus curtail the service life, resulting in premature failures and can thus reduce the availability of a network. By the same token, such heating phenomena, in addition to changing environmental conditions, also set individual capacity limits on the affected lines.

As part of a collection, in particular from offshore systems, there is the requirement it is necessary to be able to furnish proof of a correspondingly sufficient coverage of all lines. In addition, it is necessary to perform an annual inspection of the burial depths of the respective lines. To this end, there are known approaches, among others the one in DE 25 30 589 A1, in which on the one hand, a distance between a measuring point and a conduit composed of a magnetic material must first be located and then, with the aid of an electromagnetic alternating current method, a secondary field signal injected into a conduit is then measured in a detector cell in order to determine a distance and on the other hand, a sonar measurement is used as a basis for determining a distance between the detector cell and a respective surface of the sea bed as the surface of the covering. Based on a simple difference measurement, this makes it possible to determine a thickness of the covering layer.

In addition, GB 2 419 956 B has disclosed a method for detecting undersea cables and other electrically conductive bodies underneath a sea bed or ocean bed using pulsed electromagnetic fields.

Further, WO 2012/178158 A1 discloses a metal object or feature detection apparatus and method using a number of so-called quadrant coils for excitation of magnetic fields and a plurality of receiver coils equally distributed within arrays built up by the quadrant coils. The known apparatus may be operated in three modes. One of these modes is characterized in that said quadrant coils are energized sequentially and all of the receiver coils are used to measure a magnitude of magnetic field perturbation.

The object of the present invention is to modify a method and corresponding device by increasing the measurement precision.

According to the invention, this is achieved by the features of the independent claims in that a method for measuring a burial depth of a line in which a detector cell transmits an electromagnetic pulse as a primary signal and a secondary signal is received and at the same time, a height of the detector cell above the bottom is measured, characterized in that more than one excitation coil extending in an xy plane is used, the excitation coils are positioned next to one another in an orientation essentially perpendicular to a center axis of the line and are moved essentially over the line, along this center axis being parallel to the y-axis of a Cartesian coordinate system. The excitation coils transmit electromagnetic pulses in a time-lagged fashion as a primary signal. This produces a kind of transmitting bar, which is moved in an essentially perpendicularly aligned direction over the line to be investigated. In addition, receiver coils that are equally distributed in the xy plane across the entire array of transmission coils and that carry out measurements in at least two axis, x and z axes of said Cartesian coordinate system, oriented orthogonally to one another and to the elongation of the line as well as the direction of propagation. All of such transmission coils measure the secondary signals in reaction to the transmission of a primary pulse by the transmission coils. Consequently, across the arrangement of transmission coils, a kind of array of receiver coils is used to pick up secondary signals from different respective positions. Because of spatial arrangement of magnetic fields, the receiver coils that are situated in a distributed fashion in the xy plane detect a secondary signal, possibly always with spatial components that differ in their magnitude. It is thus possible to draw better inferences as to a depth position of the line to be investigated. Since distance determinations of a height above the sea bed carried out, for example, based on sonar measurements are very precise today, it is possible, based on the difference between the distance between the line and the detector cell on the one hand and a height of the detector cell above the sea bed on the other, it is possible to very reliably determine a thickness of a covering of the line.

This object is also attained by means of a device that includes an array of more than one excitation coil extending in an xy plane; the excitation coils extending essentially perpendicular to a center axis of the line are arranged for being moved essentially along this center axis of the line; the coils are embodied for transmitting time-lagged electromagnetic pulses; and equally distributed across the entire array of transmitting coils in pairs of at least two receiver coils carry out measurements in at least two axes oriented orthogonally to one another respectively, all of which are embodied to execute measurements of a secondary signal in reaction to the transmission of primary pulses by the transmission coils. As long as there are two receiver coils used as a pair, the respective two axes are oriented orthogonally to center axis of the line and the direction of propagation.

Advantageous modifications are the subject of the respective independent claims. According to them, the receiver coils measure secondary signals as a reaction to the primary pulse over a certain time span only after a fixed time lag relative to a transmission of an electromagnetic pulse or primary pulse by the transmission coils e.g. in terms of evaluation. This time lag between the transmission of a primary pulse and a measurement of secondary signals is, for example, in a range of 400 up to 550 µs, and preferably approximately 498 µs for use in marine or salt-water. this range of time during the measurement span varies depending on different variables such as e.g. a line diameter, line depth, conductivity of the water, respectively.

In an embodiment of the present invention it is preferred that the measurement of the secondary signals is carried out for a time span of up to about 10 ms. In an embodiment of the invention signals have faded out after 10 ms and that is why the measurement has stopped resulting in said time span as a rule of thumb. However, there are cases imaginable for instance when the cable is heavier and thicker or the cable is buried at a lower depth, where the signal fades out after more than 10ms, for instance after 15 ms. In such a case it is desirable to keep on measuring until all the relevant signals have faded out enhancing said time span up to about 15 ms.

A time span at the beginning is left out in terms of evaluation to cut away the influence of a number of side effects like e.g. reflections cause by marine water or salt-water and the like. In an alternative method, a correction regarding the influence of the salt water is carried out by first measuring the secondary signals obtained from the salt-water only and subsequently subtracting this from the secondary signals received during analysis of the burial depth of the line. By doing so the result is just the secondary signal originating from the line.

In an embodiment it is preferred that said arrangements or pairs of receiver coils are provided as receiver units, which are embodied like small cubes inside the array composed of the transmission coils or a plane parallel to said array. However, in an alternative embodiment, receiver units are located in a xy plane parallel to the array composed of the transmission coils. However, keeping in mind the effective size of receiver units in real life, the person skilled in the art certainly understands, that even a somewhat staggered positioning of receiver units is regarded to be a location of receiver units in a xy plane.

Preferably, the transmission coils and receivers or receiver units are affixed to a wing-shaped support composed of an electrically nonconductive material. Such a design can be embodied in a flow-optimized way in order to also be positionally stable at a nominal speed of an apparatus as described above under water with a reasonable flow resistance. Using known means and methods, the detector cell embodied in this way can also be changed in its position, in particular relative to a line, by means of a control. In addition to controllable rudders, small screws driven by electric motors or compressed air motors can be used like the ones that are known from mini-submarines or remotely operated underwater vehicles (ROVs).

Other features and advantages of embodiments according to the invention will be described in greater detail below in conjunction with exemplary embodiments based on the drawings. In the drawings:
- Fig. 1:: is a schematic top view of a device that is moved at a speed v centrally over a line extending under a sea bed surface in order to measure a thickness of a covering;
- Figures 2a and 2b:: show schematic depictions of a section extending in a plane II-II from Fig. 1 during the impact of electromagnetic pulses and during the emission of a secondary signal.

Throughout the different figures of the drawings, the same reference numerals are consistently used for the same elements. Further, a Cartesian coordinate system is used throughout all figures modelling an ideal situation of application, where the center axis of a line as well as a direction of motion of a device according to the present invention are parallel to the y-axis of said Cartesian coordinate system.

Because of the growing importance of so-called offshore wind farms for the production of renewable energy, it is very important to protect, monitor, and/or inspect a line network that is to be constructed and maintained for these wind farms. Without restricting a use field of the present invention, only on an inspection of such lines will be discussed below. Basically, related and alternative use fields in the realm of archeology, prospecting for natural resources, or locating pipelines and the like are not precluded from a use of the method and devices according to the invention.

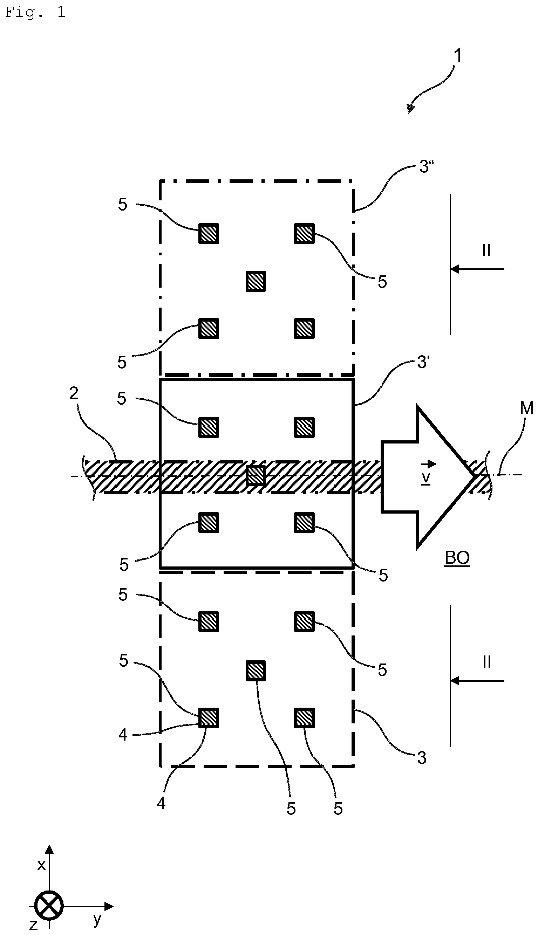

The illustration in Fig. 1 shows a top view of a device 1, which is moved as a detector cell at a speed v centrally over a line 2 extending under a sea bed surface BO in order to measure a thickness Δ of a covering. The device 1 in this case includes three excitation or transmission coils 3, 3', 3" extending in the xy plane, which are positioned next to one another in a span essentially perpendicular to a center axis M of the line 2. Being perpendicular to a center axis M of the line 2 is the best case in theory, but hard to be carried out exactly in reality. However, the method described has shown robust results even in case of deviations regarding said positioning. This is why the term "essentially" is used in this connection.

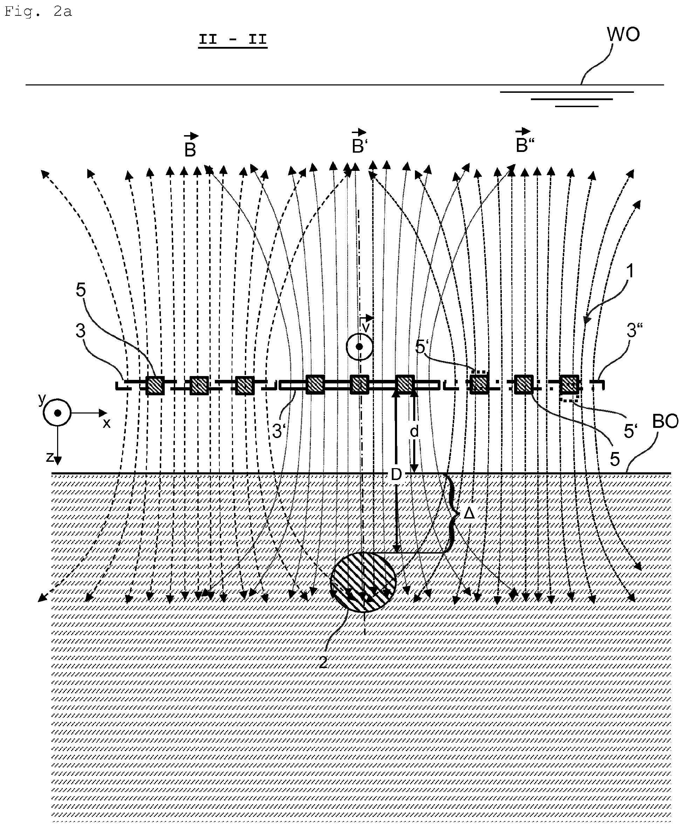

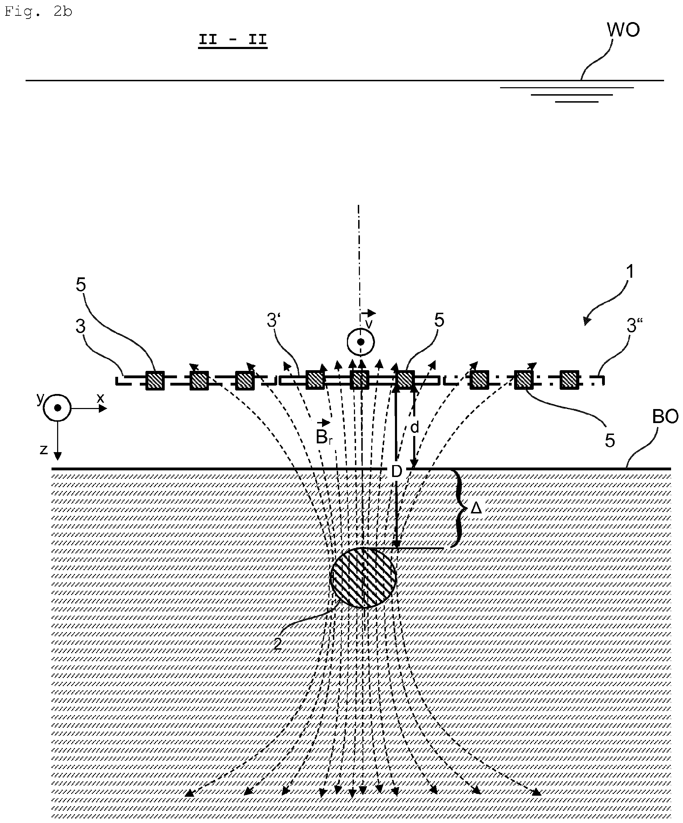

As shown in more detail in Figures 2a and 2b, the transmission coils 3, 3', 3" transmit electromagnetic pulses B, B', B" that are time-lagged relative to one another as a primary signal. These pulses B, B', B" also penetrate the sea bed surface BO of the indicated sea bed and excite the flow of induced currents in the electrically conductive material of the line extending 2. These currents decay and in turn generate secondary electromagnetic signals Bᵣ.

Distributed in the xy plane across the array of transmission coils 3, 3', 3" is an arrangement of receiver coils 4 for receiving the secondary electromagnetic signals Bᵣ. In a manner not shown in the drawing, two respective receiver coils 4 are combined with two axes or center axes extending in x and z of the Cartesian coordinate system respectively. Thus, two receiver coils 4 are combined as a pair extending orthogonally to one another to form a cube-like receiver unit 5. As a matter of the fact that the line 2 under a sea bed surface BO as the target is lying parallel to the y-axis of said Cartesian coordinate system changes in this direction may be neglected in this embodiment of the invention.

In this embodiment, there are five cube-like receiver units 5 used distributed in a more or less equidistant manner within each of the transmission coils 3, 3', 3" and beyond. Receiver units 5' shown in dashed lines are cube-like receiver units in a somewhat staggered configuration, which still is regarded as a xy-plane configuration within the scope of the present invention reduce to deviations in real life showing very little effect to the method described in here. Thus, all cube-like receiver units 5 are regarded to be equal even in case of a deviation of their respective position. Said receiver units 5 are made to measure only the secondary signals Bᵣ in the receiver coils 4 of the receiver units 5 for evaluation after a specified time lag Δt from the transmission of primary pulses by the transmission coils 3, 3', 3". This may be achieved by switching means not further disclosed here. Approximately 498 µs is used as the time lag Δt.

The illustration in Fig. 2a shows the measurement principle as a depiction of a section in a plane II-II from Fig. 1. According to it, the detector cell 1 is moved at a basically arbitrary depth under the surface of a body of water WO at a distance d above the surface of the sea bed BO of the indicated sea bed at the speed v; in this case, exactly in the direction of the y-axis and over the line 2. The distance d can be exactly determined by means of a sonar measurement or similar known devices that are also provided on the detector cell 1 without further disclosure. The transmission coils 3, 3', 3" and receivers 5 are affixed to a wing-shaped support composed of an electrically nonconductive material and can thus be moved as a unit and, using known means or drive units, can be corrected in their position relative to the line 2 for reasons that will be explained in greater detail below. However, this embodiment shows a way there the receiver units 5 are located within the array composed of the transmission coils 3, 3', 3" in about the same xy plane, if the certain height of the components and especially the receiver units 5 is kept in mind. However, an arrangement in parallel planes would do as well from electromagnetics point of view, where moving and positioning under water might get more difficult e.g. due to higher flow resistance.

The excitation coils 3, 3', 3" all lie in an xy plane and transmit electromagnetic pulses that are time-lagged relative to one another as a primary signal, as indicated by the different field lines B, B', and B" in Fig. 2a.

The illustration in Fig. 2b shows the section extending in the plane II-II from Fig. 1 during the emission of a secondary signal Bᵣ in response to currents induced in an electrically conductive body of the line 2 buried under the surface or the seabed BO. Due to the general three-dimensional characteristic of a magnetic field this response signal Bᵣ is registered in different magnitude as well as significantly differing vectorial analysis depending form the position of the respective receiver units 5 within the detector cell 1.

Across the array of transmission coils 3, 3', 3", distributed in the xy plane, receiver units 5 are provided, which all measure the secondary signals Bᵣ, not shown in detail here, that are generated in response to the transmission of each primary pulse by one of the transmission coils 3, 3', 3". Since the receiver units 5 each have receiver coils 4 that measure in two axes x and z extending orthogonal to one another, reception signals are picked up simultaneously at different points of the detector cell 1 that are slightly offset from one another. For simple reasons of geometry, the receiver units 5 according to Figures 2a und 2b are each positioned at different angles and distances from the line 2. As a result, the respectively detected reception signals also differ from one another fundamentally. Based on these differences in the at least two spatial axes, a distance D of the detector cell 1 from the line 2 can be determined, the large number of measurement values making it possible to compensate for measuring inaccuracies. A thickness Δ of a covering layer over the line 2 can thus be determined continuously along the line 2 as a simple difference between the distances d and D. Symmetries within the described arrangement help to check the plausibility of the measured values. For example, excitation by coils 3 and 3" results in a mirror-symmetric field, so that a comparable symmetry can also be expected in the response signals. This effect may be used to reduce the influence of e.g. noise. Due to the longitudinal extension of the line 2 and a resulting form of the fields, the evaluation of response signals Bᵣ in this extension axis y is hardly informative. This means that measurement and calculation efforts can be saved here.

In an exemplary embodiment, each transmission coil 3, 3', 3" is embodied as a rectangle with the edge lengths of approximately 1.5 m * approximately 1.41 m with a winding at a nominal current of approximately 170 A and a voltage between about 10 V to less than about 25 V. It can be shown, that in case of deviation regarding an axial offset as well as a coverage thickness Δ the amplitudes clearly decrease from a situation with a low coverage thickness Δ and a measurement position exactly over the center axis M of the line . Basically, however, the curve of an x component is always essentially point-symmetrical to the origin 0, 0, the y component remains at about 0 due to symmetry of the line 2 and the detector cell 1 being torn at least parallel to the y-axis, while the z component has a curve that is axially symmetrical to the zero point.

Finally, a time decay at maximum amplitude for three different diameters of cables has been measured within the same field. Certainly, the best and strongest response is given from the cable having the larges diameter. However, over the measurements it was found that a response signal may be used up to 10 ms after switching of the primary signal. A time lag Δt in a range of 400 up to 550 µs cutting away by appropriate switching means analysis of the data derived from a respective measurement still gives the chance to receive a strong and reliable result for measuring a thickness Δ of a covering over the line 2 under examination.

### Reference Numeral List

- 1: device / detector cell
- 2: line
- 3, 3', 3": excitation / transmission coil
- 4: receiver coil
- 5: cube-like receiver unit
- 5': cube-like receiver unit in a staggered configuration which still is regarded as a xy-plane configuration

- B, B', B": electromagnetic excitation pulse, primary pulse
- Bᵣ: secondary signal in response to currents induced in an electrically conductive body by a primary pulse B,B',B"
- BO: sea bed surface
- d: height of the detector cell 1 above the sea bed surface BO
- D: distance of the detector cell 1 from the line 2
- M: center axis of the line 2
- v: speed
- WO: surface of the water
- x, y, z: axes of a Cartesian coordinate system
- Δ: thickness of a covering over the line 2

## Claims

1. A method for measuring a burial depth (Δ) of a line (2) buried underground,
in which a detector cell (1) transmits an electromagnetic pulse (B, B', B") as a primary signal and a secondary signal (Bᵣ) is received and based on it, a distance (D) of the detector cell (1) from the line (2) is calculated, and
at the same time, a height (d) of the detector cell (1) above the soil surface (BO) is measured,
and in order to determine the thickness (Δ) of the covering, the difference is calculated between the distance (D) and the height (d),
**characterized in that**
more than one excitation or transmission coil (3, 3', 3") extending in an xy-plane of a Cartesian coordinate system is used,
the transmission coils (3, 3', 3") are positioned next to one another in a span extending perpendicular to a center axis (M) of the line (2) and
are moved over the line (2) along this center axis (M) being parallel to the y-axis of said Cartesian coordinate system;
the transmission coils (3, 3', 3") transmit time-lagged electromagnetic pulses (B, B', B") as a respective primary signal, and
receiver coils (4) are used, which are arranged in an equally distributed fashion in the xy-plane across the array of transmission coils (3, 3', 3"),
where two receiver coils (4) are combined with two axes or center axes extending in x-axis and z-axis of the Cartesian coordinate system respectively and said two receiver coils (4) are combined as a pair extending orthogonally to one another to form a cube-like receiver unit (5); and
all of the receiver coils (4) measure secondary signals (Bᵣ) in reaction to the transmission of a respective primary pulse (B, B', B") by the transmission coils (3, 3', 3") .

2. The method according to the preceding claim, **characterized in that** the receiver coils (4) measure the secondary signals (Bᵣ) over a certain time span only after a fixed time lag (Δt) relative to a transmission of an electromagnetic pulse (B, B', B") by the transmission coils (3, 3', 3").

3. The method according to the preceding claim, **characterized in that** a time lag (Δt) in a range of 400 up to 550 µs and preferably of approximately 498 µs is used.

4. The method according to one of the preceding claims, **characterized in that** the measurement of the secondary signals (Bᵣ) is carried out for a time span of up to about 10 ms.

5. The method according to one of the preceding claims, **characterized in that** receiver coils (4) situated in a uniformly distributed fashion are used, which are all situated within the array composed of the transmission coils (3, 3', 3") or a plane parallel to said array.

6. A device for measuring a thickness (Δ) of a covering of a line (2), which includes a detector cell (1), which is embodied to transmit an electromagnetic pulse as a primary signal and to receive a secondary signal (Bᵣ), and evaluation means for determining a distance (D) of the detector cell (1) from the line (2);
means for determining a height (D) of the detector cell (1) above the soil surface (BO) and means for determining a thickness (Δ) of the covering by calculating the difference of the distance (D) of the detector cell (1) from the line (2) and the height (d) of the detector cell (1) above the soil surface (BO),
**characterized in that**
the device comprises means for transmitting the primary signal and means for measuring the secondary signal, wherein
more than one excitation or transmission coil (3, 3', 3") extending in an xy plane of a Cartesian coordinate system is provided as means for transmitting the primary signal,
the transmission coils (3, 3', 3") are arranged next to one another in a span extending perpendicular to a center axis (M) of the line (2) and
are movable along this center axis (M) over the line (2) being parallel to the y-axis of said Cartesian coordinate system;
the transmission coils (3, 3', 3") are embodied for transmitting electromagnetic pulses in a time-lagged fashion as a primary signal (B, B', B"), and receiver coils (4) are provided as means for measuring the secondary signal and are arranged in an equally distributed fashion in the xy plane across the array of transmission coils (3) where to receiver coils (4) are combined as a pair extending orthogonally to one another to form a cube-like receiver unit (5) respectively which each measure in x-axis and z-axis within said Cartesian coordinate system; and
all of the receiver coils (4) are embodied to measure respective secondary signals (Bᵣ) in reaction to the transmission of a respective primary pulse (B, B', B") by the transmission coils (3, 3', 3").

7. The device according to the preceding claim, **characterized in that** a pair of receiver coils (4) of the different axes (x, z) are combined as a receiver unit (5), where receiver units (5) are embodied inside the array composed of the transmission coils (3, 3', 3") or a plane parallel to said array.

8. The device according to one of the two preceding claims, **characterized in that** receiver units (5) are located in a xy plane parallel to the array in a xy plane composed of the transmission coils (3, 3', 3").

9. The device according to one of the three preceding claims, **characterized in that** the transmission coils (3, 3', 3") and receiver units (5) are affixed to a wing-shaped support composed of an electrically nonconductive material.

10. The device according to one of the four preceding claims, **characterized in that** each transmission coil (3, 3', 3") is embodied as a rectangle with the edge lengths of approximately 1.5 m * approximately 1.41 m with a winding at a nominal current of approximately 170 A.

11. The device according to one of the five preceding claims, **characterized in that** the transmission coil (3, 3', 3") are arranged in line forming a bar.

## Patentansprüche

1. Ein Verfahren zur Messung einer Überdeckung (Δ) einer im Boden verlegten Leitung (2),
bei dem eine Messzelle (1) einen elektromagnetischen Impuls (B, B', B") als Primärsignal aussendet und ein Sekundärsignal (Bᵣ) empfangen wird und daraus ein Abstand (D) der Detektorzelle (1) von der Leitung (2) berechnet wird, und
gleichzeitig eine Höhe (d) der Messzelle (1) über der Bodenoberfläche (BO) gemessen,
wobei zur Bestimmung der Mächtigkeit (Δ) der Überdeckung die Differenz zwischen dem Abstand (D) und der Höhe (d) gebildet wird,
**dadurch gekennzeichnet, dass**
mehr als eine in einer xy-Ebene eines kartesischen Koordinatensystems verlaufende Sende- oder Erregerspule (3, 3', 3") verwendet wird,
die Erregerspulen (3, 3', 3") nebeneinander in einer Erstreckung angeordnet sind, die sich senkrecht zu einer Mittelachse (M) der Leitung (2) erstreckt, und
über die Leitung (2) entlang dieser Mittelachse (M) bewegt werden, die parallel zur y-Achse des kartesischen Koordinatensystems verläuft;
die Erregerspulen (3, 3', 3") zeitlich gegeneinander versetzt elektromagnetischer Impulse (B, B', B") als ein jeweiliges Primärsignal aussenden, und
über die Anordnung aller Erregerspulen (3, 3', 3") hinweg in der xy-Ebene gleichmäßig verteilt angeordnete, in mindestens zwei zueinander orthogonal stehenden Achsen (x, z) messende Empfängerspulen (4) verwendet werden,
wobei zwei Empfängerspulen (4) mit zwei Achsen oder Mittelachsen kombiniert sind, die sich jeweils in der x-Achse und der z-Achse des kartesischen Koordinatensystems erstrecken, und die beiden Empfängerspulen (4) als ein Paar kombiniert sind, das sich zueinander orthogonal erstreckt, um eine würfelartige Empfängereinheit (5) zu bilden; und
alle Empfängerspulen (4) zum Messen Sekundärsignale (Bᵣ) als Reaktion auf die Aussendung eines jeweiligen Primärimpulses (B, B', B") durch die Erregerspulen (3, 3', 3") ausgebildet sind.

2. Verfahren nach dem vorhergehenden Anspruch, **dadurch gekennzeichnet, dass** die Empfängerspulen (4) erst nach einem festgelegten zeitlichen Abstand (Δt) zu der Aussendung eines elektromagnetischen Impulses (B, B', B") durch die Erregerspulen (3, 3', 3") die Sekundärsignale (Bᵣ) über eine bestimmte Zeitdauer messen.

3. Verfahren nach dem vorhergehenden Anspruch, **dadurch gekennzeichnet, dass** ein zeitlicher Abstand (Δt) in einem Bereich von 400 bis zu 550 µs und vorzugsweise von ca. 498 µs verwendet wird.

4. Verfahren nach einem der vorstehenden Ansprüche, **dadurch gekennzeichnet, dass** die Messung des Sekundärsignals (Bᵣ) über eine Zeitdauer von bis zu ungefähr 10 ms durchgeführt wird.

5. Verfahren nach einem der vorstehenden Ansprüche, **dadurch gekennzeichnet, dass** gleichmäßig verteilt angeordnete Empfängerspulen (4) verwendet werden, die alle innerhalb der aus den Erregerspulen (3, 3', 3") gebildeten Anordnung oder einer dazu parallel liegen Ebene angeordnet sind.

6. Vorrichtung zur Messung einer Mächtigkeit (Δ) einer Überdeckung einer Leitung (2), die eine Messzelle (1) umfasst, die zum Aussenden eines elektromagnetischen Impulses (B, B', B") als Primärsignal sowie zum Empfangen eines Sekundärsignals ausgebildet ist,
sowie Auswertemittel zum Bestimmen eines Abstands (d) der Messzelle (1) zu der Leitung (2);
Mittel zum Bestimmen einer Höhe (D) der Messzelle (1) über dem Boden (BO), sowie
Mittel zum Bestimmung einer Mächtigkeit (Δ) der Überdeckung durch Differenzbildung des Abstands (D) der Messzelle (1) zu der Leitung (2) und der Höhe (d) der Messzelle (1) über dem Boden (BO),
**dadurch gekennzeichnet, dass**
die Vorrichtung Mittel zur Übertragung des Primärsignals und Mittel zur Messung des Sekundärsignals umfasst,
als Mittel zum Aussenden von Primärsignalen (B, B', B") mehrere in einer xy-Ebene verlaufende Erregerspulen (3, 3', 3") vorgesehen sind,
die Erregerspulen (3, 3', 3") nebeneinander in einer Erstreckung senkrecht zu einer Mittelachse (M) der Leitung (2) angeordnet und
entlang dieser Mittelachse (M) über der Leitung (2) beweglich sind,
wobei die Mittelachse (M) parallel zur y-Achse des genannten kartesischen Koordinaten-Systems liegt;
wobei die Erregerspulen (3, 3', 3") zum zeitlich gegeneinander versetzten Aussenden elektromagnetischer Impulse als ein jeweiliges Primärsignal (B, B', B") ausgebildet sind, und
Empfängerspulen (4) als Mittel zum Messen des Sekundärsignals vorgesehen und in gleichmäßiger Verteilung in der xy-Ebene über die Anordnung von Sendespulen (3) angeordnet sind, wobei
jeweils zwei Empfängerspulen (4) als ein sich orthogonal zueinander erstreckendes Paar kombiniert sind, um jeweils eine würfelartige Empfängereinheit (5) zu bilden, die jeweils in der x-Achse und der z-Achse innerhalb des kartesischen Koordinatensystems messen;
und wobei die Empfängerspulen (4) alle zum Messen jeweiliger Sekundärsignale (Bᵣ) auf die Aussendung eines jeden Primärimpulses (B, B', B") durch die Erregerspulen (3, 3', 3") hin ausgebildet sind.

7. Vorrichtung nach dem vorhergehenden Anspruch, **dadurch gekennzeichnet, dass** ein Paar von Empfängerspulen (4) mit unterschiedlichen Mittelachsen (x, z) als Empfangseinheit (5) verbunden sind, wobei Empfangseinheiten (5) innerhalb der aus den Sendespulen (3, 3', 3") bestehenden Anordnung oder in einer zu dieser Anordnung parallelen Ebene angeordnet sind.

8. Vorrichtung nach einem der beiden vorhergehenden Ansprüche, **dadurch gekennzeichnet, dass** die Empfangseinheiten (5) in einer xy-Ebene parallel zu der aus den Sendespulen (3, 3', 3") zusammengesetzten Anordnung angeordnet sind.

9. Vorrichtung nach einem der drei vorhergehenden Ansprüche, **dadurch gekennzeichnet, dass** die Sendespulen (3, 3', 3") und Empfangseinheiten (5) an einem flügelförmigen Träger befestigt sind, der aus einem elektrisch nicht leitfähigen Material besteht.

10. Vorrichtung nach einem der vier vorstehenden Ansprüche, **dadurch gekennzeichnet, dass** jede Erregerspule (3, 3', 3") als Rechteck mit den Kantenlängen etwa 1,5 m * ca. 1,41 m mit einer Windung bei einem Nennstrom von ca. 170 A ausgebildet ist.

11. Vorrichtung nach einem der fünf vorhergehenden Ansprüche, **dadurch gekennzeichnet, dass** die Übertragungsspulen (3, 3', 3") in Reihe angeordnet sind und einen Balken bilden.

## Revendications

1. Méthode de mesure de la profondeur d'enfouissement (Δ) d'une ligne (2) enterrée sous terre,
dans laquelle une cellule de détection (1) émet une impulsion électromagnétique (B, B', B") comme signal primaire et un signal secondaire (Bᵣ) est reçu et, sur cette base, une distance (D) de la cellule de détection (1) par rapport à la ligne (2) est calculée, et
Dans le même temps, une hauteur (d) de la cellule de détection (1) au-dessus de la surface du sol (BO) est mesurée,
et pour déterminer l'épaisseur (Δ) de la couverture, la différence est calculée entre la distance (D) et la hauteur (d),
**caractérisé en ce que**
plus d'une bobine d'excitation ou de transmission (3, 3', 3") s'étendant dans un plan xy d'un système de coordonnées cartésiennes est utilisée,
les bobines de transmission (3, 3', 3") sont placées l'une à côté de l'autre dans une portée s'étendant perpendiculairement à un axe central (M) de la ligne (2) et sont déplacés sur la ligne (2) le long de cet axe central (M) qui est parallèle à l'axe y dudit système de coordonnées cartésiennes;
les bobines de transmission (3, 3', 3") transmettent des impulsions électromagnétiques décalées dans le temps (B, B', B") sous la forme d'un signal primaire respectif, et Des bobines de réception (4) sont utilisées, qui sont disposées de manière également répartie dans le plan xy sur l'ensemble des bobines de transmission (3, 3', 3"), où deux bobines réceptrices (4) sont combinées avec deux axes ou axes centraux s'étendant respectivement dans l'axe x et dans l'axe z du système de coordonnées cartésiennes et lesdites deux bobines réceptrices (4) sont combinées en une paire s'étendant l'une par rapport à l'autre ou de façon orthogonale pour former une unité réceptrice en forme de cube (5); et
toutes les bobines de réception (4) mesurent les signaux secondaires (Bᵣ) en réaction à la transmission d'une impulsion primaire respective (B, B', B") par les bobines de transmission (3, 3', 3").

2. La méthode selon la revendication précédente, **caractérisée en ce que** les bobines de réception (4) mesurent les signaux secondaires (Bᵣ) sur une certaine période de temps seulement après un délai fixe (Δt) par rapport à une transmission d'une impulsion électromagnétique (B, B', B") par les bobines de transmission (3, 3', 3").

3. La méthode selon la revendication précédente, **caractérisée en ce qu'**un décalage temporel (Δt) dans une plage de 400 à 550 µs et de préférence d'environ 498 µs est utilisé.

4. La méthode selon l'une des revendications précédentes, **caractérisée en ce que** la mesure des signaux secondaires (Bᵣ) est effectuée pendant une période de temps allant jusqu'à environ 10 ms.

5. La méthode selon l'une des revendications précédentes, **caractérisée en ce que** l'on utilise des bobines de réception (4) situées de manière uniformément répartie, qui sont toutes situées dans le réseau composé des bobines de transmission (3, 3', 3") ou dans un plan parallèle audit réseau.

6. Dispositif pour mesurer l'épaisseur (Δ) d'un revêtement d'une ligne (2), qui comprend une cellule de détection (1), qui est conçue pour émettre une impulsion électromagnétique en tant que signal primaire et pour recevoir un signal secondaire (Bᵣ),
et des moyens d'évaluation permettant de déterminer une distance (D) entre la cellule de détection (1) et la ligne (2);
des moyens pour déterminer une hauteur (D) de la cellule de détection (1) au-dessus de la surface du sol (BO) et des moyens pour déterminer une épaisseur (Δ) du revêtement en calculant la différence entre la distance (D) de la cellule de détection (1) par rapport à la ligne (2) et la hauteur (d) de la cellule de détection (1) au-dessus de la surface du sol (BO),
**caractérisé en ce que**
le dispositif comprend des moyens pour transmettre le signal primaire et des moyens pour mesurer le signal secondaire, dans lequel plus d'une bobine d'excitation ou de transmission (3, 3', 3") s'étendant dans un plan xy d'un système de coordonnées cartésiennes est prévue comme moyen pour transmettre le signal primaire,
les bobines de transmission (3, 3', 3") sont disposées l'une à côté de l'autre dans une portée s'étendant perpendiculairement à un axe central (M) de la ligne (2) et sont mobiles le long de cet axe central (M) sur la ligne (2) qui est parallèle à l'axe y dudit système de coordonnées cartésiennes;
les bobines de transmission (3, 3', 3") sont conçues pour transmettre des impulsions électromagnétiques de manière décalée dans le temps sous la forme d'un signal primaire (B, B', B"), et
des bobines de réception (4) sont prévues comme moyens de mesure du signal secondaire et sont disposées de manière également répartie dans le plan xy sur l'ensemble des bobines de transmission (3), où deux bobines de réception (4) sont combinées en une paire s'étendant orthogonalement à une par rapport à l'autre pour former une unité de réception en forme de cube (5) respectivement qui mesurent chacune en axe x et en axe z dans ledit système de coordonnées cartésiennes;
et
toutes les bobines de réception (4) sont incorporées pour mesurer les signaux secondaires respectifs (Bᵣ) en réaction à la transmission d'une impulsion primaire respective (B, B', B") par les bobines de transmission (3, 3', 3") .

7. Le dispositif selon la revendication précédente, **caractérisé en ce qu'**une paire de bobines de réception (4) des différents axes (x, z) est combinée en une unité de réception (5), où les unités de réception (5) sont incorporées à l'intérieur du réseau composé des bobines de transmission (3, 3', 3") ou d'un plan parallèle audit réseau.

8. Le dispositif selon l'une des deux revendications précédentes, **caractérisé en ce que** les unités de réception (5) sont situées dans un plan xy parallèle à l'ensemble dans un plan xy composé des bobines de transmission (3, 3', 3") .

9. Le dispositif selon l'une des trois revendications précédentes, **caractérisé en ce que** les bobines de transmission (3, 3', 3") et les unités de réception (5) sont fixées sur un support en forme d'aile composé d'un matériau non conducteur de l'électricité.

10. Le dispositif selon l'une des quatre revendications précédentes, **caractérisé en ce que** chaque bobine de transmission (3, 3', 3") est réalisée sous la forme d'un rectangle avec des longueurs de bord d'environ 1,5 m * environ 1,41 m avec un enroulement à un courant nominal d'environ 170 A.

11. Le dispositif selon l'une des cinq revendications précédentes, **caractérisé en ce que** les bobines de transmission (3, 3', 3") sont disposées en ligne en formant une barre.
